# EUROPEAN PATENT APPLICATION

(11) **EP 3 796 294 A1**
(43) Date of publication of application: **24.03.2021**
(21) Application number: 18749282.2
(22) Date of filing: 31.05.2018
(51) Int. Cl.: G09F 9/33

(54) **SPHERICAL DISPLAY SCREEN-BASED IMAGE PLAYBACK SYSTEM AND METHOD**

(30) Priority: 18.05.2018 CN 201810479577
(71) Applicant: Shenzhen Glass-Free VR Tech Co., Ltd., Shenzhen Guangdong 518103 (CN)
(72) Inventor: CHEN, Gang, Shenzhen Guangdong 518103 (CN)
(74) Representative: Bingham, Ian Mark
(86) International application number: PCT/CN2018/089253
(87) International publication number: WO 2019/218397

(57) **Abstract**

The invention relates to an image playing system and playing method based on a spherical display screen, and belongs to the field of playing application through a spherical display screen. The system comprises: an input terminal, configured for performing planarization on a virtual reality panoramic image to obtain and output a planar rectangular image with an aspect ratio 2:1; a display controller, communicatively connected to the input terminal, configured for receiving the planar rectangular image with an aspect ratio 2:1 and outputting the planar rectangular image with an aspect ratio 2:1; and a spherical display screen, communicatively connected to the display controller, configured for receiving the planar rectangular image with an aspect ratio 2:1 and displaying the planar rectangular image with an aspect ratio 2:1 on the three-dimensional spherical surface of the spherical display screen. The present invention has the following advantageous effects: it is not necessary for the media server to perform a series of operations, such as image segmentation, geometric correction and image fusion. Rather, images are directly displayed in the spherical display screen simply by snapshotting the image pixels on respective latitude lines on the sphere in a certain manner. Therefore, the image processing procedure is simplified, the processing speed of the spherical display screen is accelerated, and thus the issues of image delay and image frame relay and out of sync between regions may be solved.

## Description

### BACKGROUND OF THE INVENTION

### 1. Field of the Invention

The invention relates to the field of playing application through a spherical display screen, and more particularly, to an image playing system based on a spherical display screen and playing method thereof.

### 2. Description of the Related Art

In the current Virtual Reality (VR) technology, there is a problem that users must wear VR glasses when viewing three-dimensional images, and such an immersive feeling may reduce the watching experience, worse still, users may feel dizzy using the VR glasses for a long time.

The existing LED display screen playing method is a rectangular image played on a planar, and when the rectangular image is directly converted into a hyperboloid image, image deformation and distortion will occur. In particular, serious deformation and distortion may occur in the north pole and south pole of a spherical LED display composed of a hyperboloid screen.

The method for solving the image deformation and distortion in the existing spherical LED display screen is to geometrically correct the image through the media server. In this manner, although the issue of image deformation and distortion is solved, issues of image delay, image frame relay and out of sync between regions may occur due to the fact that playing process is additionally increased and the image is processed by the traditional media server.

### SUMMARY OF THE INVENTION

In order to solve the problems in the prior art, the present invention provides a playing method and a playing system based on a spherical display screen, which is suitable for displaying of virtual reality panoramic images and conventional rectangular images on an LED spherical display screen.

The invention adopts the following technical solutions.

A playing system based on a spherical display screen, comprising:
an input terminal, configured for performing planarization on a virtual reality panoramic image to obtain and output a planar rectangular image with an aspect ratio 2:1, wherein the virtual reality panoramic image is a three-dimensional spherical image, and the planar rectangular image with an aspect ratio 2:1 is a two-dimensional planar image;
a spherical display screen, comprising a three-dimensional spherical display surface composed of a plurality of display unit panels, and having a plurality of first latitude lines parallel to one another, a plurality of pixel lamp beads being uniformly distributed on each of the plurality of first parallels;
and a display control terminal, communicatively connected to the input terminal and the spherical display screen, respectively, the display control terminal receiving the planar rectangular image with an aspect ratio 2:1 output by the input terminal and performing a snapshot process on the planar rectangular image with an aspect ratio 2:1 according to a preset snapshot strategy to obtain a virtual reality display image corresponding to the spherical display surface, and sending the virtual reality display image to the spherical display screen for displaying;
wherein the snapshot strategy is:
   presetting a planar rectangular template image associated with the spherical display screen, the planar rectangular template image being obtained by planarizing the spherical display screen, and wherein the planar rectangular template image has a plurality of first row lines that are parallel to one another and respectively corresponding to the plurality of first latitude lines, and each of the plurality of first row lines is uniformly distributed with a plurality of template pixels whose positions correspond to the plurality of pixel lamp beads, a ratio of a pitch between adjacent two of the plurality of pixel lamp beads on one of the plurality of the first latitude lines to a length of that of the plurality of the first latitude lines is identical to the ratio of the pitch between adjacent two of the plurality of template pixels on the corresponding one of the plurality of first row lines to the length of that of the plurality of first row lines;
   comparing the planar rectangular image with an aspect ratio 2:1 and the planar rectangular template image, retaining image pixels corresponding to the position of each of the pixel lamp beads in the planar rectangular image with an aspect ratio 2:1, and removing all other image pixels other than the image pixels corresponding to the position of each of the pixel lamp beads in the planar rectangular image with an aspect ratio 2:1, to obtain the virtual reality display image.

Preferably, wherein the virtual reality panoramic image has a plurality of second latitude lines parallel to one another, and each of the second latitude lines is uniformly distributed with a plurality of image pixels, and wherein the number of the image pixels on each of the plurality of second latitude lines is proportional to the length of that of the plurality of second latitude lines;
the planar rectangular image with an aspect ratio 2:1 has a plurality of second row lines that are parallel to one another and respectively correspond to the plurality of second latitude lines, and each of the second row lines is uniformly distributed with a plurality of pixel intervals with the same length, and the ratio of the number of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on corresponding positions;
when performing a snapshot process on the planar rectangular image with an aspect ratio 2:1, each of the pixel lamp beads corresponds to one of the plurality of pixel intervals, and retaining one of the image pixels of the plurality of pixel intervals corresponding to the position of each of the pixel lamp beads in the planar rectangular image with an aspect ratio 2:1, and removing all other image pixels other than one of the image pixels of the plurality of pixel intervals corresponding to the position of each of the pixel lamp beads, to obtain the virtual reality display image.

Preferably, wherein the number of the plurality of first row lines is equal to the number of the plurality of second row lines.

Preferably, wherein the input terminal comprises: a virtual reality panoramic camera, configured for collecting the virtual reality panoramic image, and performing planarization on the virtual reality panoramic image to obtain and output a planar rectangular image with an aspect ratio 2:1;
a video encoder, communicatively connected to the virtual reality panoramic camera, configured for receiving the planar rectangular image with an aspect ratio 2:1 and encoding the planar rectangular image with an aspect ratio 2:1;
and a PC, communicatively connected to the video encoder, configured for receiving the encoded planar rectangular image with an aspect ratio 2:1 and decoding the planar rectangular image with an aspect ratio 2:1, to obtain and output the decoded planar rectangular image with an aspect ratio 2:1.

Preferably, wherein the display control terminal comprises:
an LED transmitting card, configured for collecting a signal of the planar rectangular image with an aspect ratio 2:1 and perform the snapshot process on the signal of the planar rectangular image with an aspect ratio 2:1, to obtain and output a signal of the virtual reality display image;
an LED receiving card, communicatively connected to the LED transmitting card, configured for receiving the signal of the virtual reality display image and sending the signal of the virtual reality display image to the spherical display screen for displaying.

Preferably, wherein the display control terminal comprises: a LED transmitting card, configured for collecting and outputting a signal of the planar rectangular image with an aspect ratio 2:1; a LED receiving card, communicatively connected to the transmitting card, configured for receiving the signal of the planar rectangular image with an aspect ratio 2:1 and performing the snapshot process on the signal of the planar rectangular image with an aspect ratio 2:1, to obtain the virtual reality display image.

Preferably, wherein the input terminal and the display control terminal are integrated in a local PC.

The input terminal is an LED studio software installed in the local PC, and wherein the LED studio software is used to play a virtual reality video source to output the virtual reality panoramic image associated with the virtual reality video source.

Preferably, wherein the spherical display screen is composed of a plurality of display unit panels, when performing the snapshot process, the display control terminal determines a corresponding image region in the planar rectangular image with an aspect ratio 2:1 according to the position of each of the plurality of display unit panels in the spherical display screen, and determines the corresponding pixel interval and the image pixel in the corresponding display area according to the position of each of the pixel lamp beads in each of the plurality of display unit panels in the plurality of first latitude lines.

A playing method based on a spherical display screen, which comprises the steps of:
Step S1, adopting an input terminal, wherein the input terminal performs planarization on a virtual reality panoramic image to obtain and output a planar rectangular image with an aspect ratio 2:1, and the virtual reality panoramic image is a three-dimensional spherical image, and the planar rectangular image with an aspect ratio 2:1 is a two-dimensional planar image;
Step S2, adopting a display control terminal communicatively connected to the input terminal, wherein the display control terminal receives the planar rectangular image with an aspect ratio 2:1 output by the input terminal, and performs a snapshot process on the planar rectangular image with an aspect ratio 2:1 according to a preset snapshot strategy to obtain a virtual reality display image corresponding to the spherical display surface, and sends the virtual reality display image to the spherical display screen for displaying;
a spherical display screen, wherein the spherical display screen comprises a three-dimensional spherical display surface composed of a plurality of display unit panels, and the spherical display screen has a plurality of first latitude lines which are parallel to one another, a plurality of pixel lamp beads are uniformly distributed on each of the plurality of first latitude lines, wherein the snapshot strategy is:
   presetting a planar rectangular template image associated with the spherical display screen, wherein the planar rectangular template image has a plurality of first row lines that are parallel to one another and respectively corresponds to the plurality of first latitude lines, and each of the plurality of first row lines is uniformly distributed with a plurality of template pixels corresponding to the plurality of pixel lamp beads, a ratio of a pitch between the adjacent two of the plurality of pixel lamp beads on one of the plurality of first latitude lines to a length of that of the plurality of first latitude lines is identical to the ratio of the pitch between adjacent two of the plurality of template pixels on the corresponding one of the plurality of first row lines to the length of that of the first row lines;
   comparing the planar rectangular image with an aspect ratio 2:1 and the planar rectangular template image, retaining image pixels corresponding to the position of each of the plurality of pixel lamp beads in the planar rectangular image with an aspect ratio 2:1, and removing all other image pixels other than the image pixels corresponding to the position of each of the plurality of pixel lamp beads in the planar rectangular image with an aspect ratio 2:1, to obtain the virtual reality display image.

Preferably, wherein the virtual reality panoramic image has a plurality of second latitude lines parallel to one another, and each of the plurality of second latitude lines is uniformly distributed with a plurality of image pixels, and wherein the number of the plurality of image pixels on each of the plurality of the second latitude lines is proportional to the length of that of the plurality of second latitude lines;
the planar rectangular image with an aspect ratio 2:1 has a plurality of second row lines that are parallel to one another and respectively corresponds to the plurality of second latitude lines, and each of the plurality of second row lines is uniformly distributed with a plurality of pixel intervals with the same length, and the ratio of the number of the plurality of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on the corresponding positions;
when performing a snapshot process on the planar rectangular image with an aspect ratio 2:1, each of the pixel lamp beads corresponds to one of the plurality of pixel intervals, and retains one of the image pixels of the plurality of pixel intervals corresponding to the position of each of the pixel lamp beads in the planar rectangular image with an aspect ratio 2:1, and removes all other image pixels other than one of the image pixels of the plurality of pixel intervals corresponding to the position of each of the pixel lamp beads, to obtain the virtual reality display image.

Preferably, wherein the number of the plurality of first row lines is equal to the number of the plurality of second row lines.

Additionally, the Step S1 comprises the steps of:
Step S11a, adopts a virtual reality panoramic camera, wherein the virtually reality panoramic camera collects the virtual reality panoramic image, and performs planarization on the virtual reality panoramic image to obtain and output a planar rectangular image with an aspect ratio 2:1;
Step S12a, adopting a video encoder communicatively connected to the virtual reality panoramic camera, wherein the video encoder receives the planar rectangular image with an aspect ratio 2:1 and encoding the planar rectangular image with an aspect ratio 2:1; and
Step S13a, adopts a PC communicatively connected to the video encoder, wherein the PC receives the encoded planar rectangular image with an aspect ratio 2:1 and decodes the planar rectangular image with an aspect ratio 2:1, to obtain and output the decoded planar rectangular image with an aspect ratio 2:1.

Furthermore, the Step S2 comprises the steps of:
Step S21a, adopts an LED transmitting card, wherein the LED transmitting card collects a signal of the planar rectangular image with an aspect ratio 2:1 and performs a snapshot process on the signal of the planar rectangular image with an aspect ratio 2:1, so as to obtain and output the signal of the virtual reality display image;
Step S22a, adopting an LED receiving card communicatively connected to the LED transmitting card, wherein the LED receiving card receives the signal of the virtual reality display image and sends the signal of the virtual reality display image to the spherical display screen for displaying.

Preferably, the Step S2 comprises the steps of:
Step S21b, adopts a LED transmitting card, wherein the LED transmitting card collects and outputs a signal of the planar rectangular image with an aspect ratio 2:1;
Step S22b, adopts a LED receiving card communicatively connected to the LED transmitting card, wherein the LED receiving card receives the signal of the planar rectangular image with an aspect ratio 2:1 and performs a snapshot process on the signal of the planar rectangular 2:1 image, to obtain the virtual reality display image.

Preferably, wherein the input terminal and the display control terminal are integrated in a local PC; the input terminal is a LED studio software installed in the local PC, and wherein the LED studio software is used to play a virtual reality video source to output the virtual reality panoramic image associated with the virtual reality video source.

Preferably, the spherical display screen is composed of a plurality of display unit panels, when performing the snapshot process, the display control terminal determines a corresponding image region in the planar rectangular image with an aspect ratio 2:1 according to the position of each of the plurality of display unit panels in the spherical display screen, and determines the corresponding pixel interval and the image pixel in the corresponding display area according to the position of each of the plurality of pixel lamp beads in each of the plurality of display unit panels in the plurality of first latitude lines.

The above technical scheme has the following advantageous effects: in the present invention, it is not necessary for the media server to perform a series of operations, such as image segmentation, geometric correction and image fusion. Rather, images are directly displayed in the spherical display screen simply by snapshot the image pixels on respective latitude lines on the sphere in a certain manner. Therefore, the image processing procedure is simplified, the processing speed of the spherical display screen is accelerated, and thus the issues of image delay and image frame relay and out of sync between regions may be solved.

### BRIEF DESCRIPTION OF THE DRAWINGS

The accompanying drawings, together with the specification, illustrates exemplary embodiments of the present disclosure, and, together with the description, serves to explain the principles of the present invention.
Figure 1 is a functional block diagram of a playing system based on a spherical display screen in a preferred embodiment of the present invention;
Figure 2 is a functional block diagram of an input terminal in a preferred embodiment of the present invention;
Figure 3 is a functional block diagram of a display control terminal in a preferred embodiment of the present invention;
Figure 4 is a functional block diagram of an input terminal and a display control terminal in a preferred embodiment of the present invention;
Figure 5 is a flowchart of a playing method based on a spherical display screen in a preferred embodiment of the present invention;
Figure 6 is a flowchart of Step S1 in a preferred embodiment of the present invention;
Figure 7 is one of the flowcharts of Step S2 in a preferred embodiment of the present invention;
Figure 8 is a second flowchart of Step S2 in a preferred embodiment of the present invention;
Figure 9 is a schematic diagram of an arrangement of pixel lamp beads in the spherical display screen on the first latitude lines in a preferred embodiment of the present invention;
Figure 10 is a schematic diagram of the distribution of the pixel lamp beads on the two-dimensional plane after the spherical display screen is expanded along the first latitude lines in a preferred embodiment of the present invention;
Figure 11 is a schematic diagram of an arrangement of pixel lamp beads in corresponding positions on the first row lines in a planar rectangular template image in a preferred embodiment of the present invention;
Figure 12 is a schematic diagram of a distribution of display unit plates on a spherical display surface in a spherical display screen in a preferred embodiment of the present invention;
Figure 13 is a schematic diagram of a distribution of display unit panels in a unit display screen on the two-dimensional plane after the spherical display screen is expanded along the first latitude lines in a preferred embodiment of the present invention;
Figure 14 is a schematic diagram of a distribution of pixel intervals corresponding to display unit plates in a planar rectangular template image in a preferred embodiment of the present invention;
Figures 15-18 are schematic diagrams of flowcharts of a snapshot playing method based on a spherical display screen in a preferred embodiment of the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skills in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, the term "plurality" means a number greater than one.

Hereinafter, certain exemplary embodiments according to the present disclosure will be described with reference to the accompanying drawings.

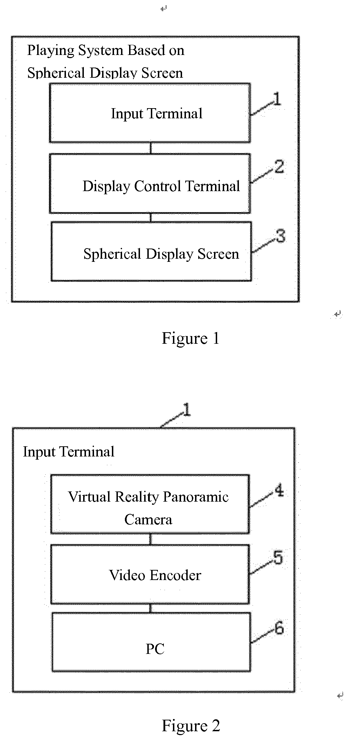

As shown in Figure 1, the present invention provides a playing system based on a spherical display screen 3, comprises:
an input terminal 1, configured for performing planarization (specifically, planarization refers to a process in which a three-dimensional spherical image is expanded, tiled and further stretched to obtain a two-dimensional image) on a virtual reality panoramic image to obtain and output a planar rectangular image with an aspect ratio 2:1, , wherein the virtual reality panoramic image is a three-dimensional spherical image, and the planar rectangular image with an aspect ratio 2:1 is a two-dimensional planar image;
a spherical display screen 3, comprising a three-dimensional spherical display surface composed of a plurality of display unit panels, and having a plurality of first latitude lines parallel to one another, a plurality of pixel lamp beads being uniformly distributed on each of the first latitude lines; and
a display control terminal 2, communicatively connected to the input terminal 1 and the spherical display screen 3, respectively, the display control terminal 2 receiving the planar rectangular image with an aspect ratio 2:1 output by the input terminal 1 and performing a snapshot process on the planar rectangular image with an aspect ratio 2:1 according to a preset snapshot strategy, so as to obtain a virtual reality display image which corresponds to the spherical display surface, and the display control terminal 2 sending the virtual reality display image to the spherical display screen 3 for displaying;
wherein the snapshot strategy is:
   presetting a planar rectangular template image associated with the spherical display screen 3, the planar rectangular template image being obtained by planarizing (specifically, planarization refers to a process in which a three-dimensional spherical image is expanded, tiled and further stretched to obtain a two-dimensional image. Since the spherical display screen consists of a plurality of arcuate display unit panels, the planarization of the spherical display screen 3 also refers to a process in which the spherical display screen 3 is expanded, tiled and further stretched to be formed into a two-dimensional image, wherein the plurality of arcuate display unit panels are also expanded, tiled and further stretched) the spherical display screen 3, and wherein the planar rectangular template image has a plurality of first row lines that are parallel to one another and respectively corresponding to the plurality of first latitude lines, and each of the plurality of first row lines is uniformly distributed with a plurality of template pixels, whose positions correspond to the pixel lamp beads, a ratio of a pitch between adjacent two of the plurality of pixel lamp beads on one of the plurality of first latitude lines to a length of that of the plurality of first latitude lines is identical to the ratio of the pitch between adjacent two of the plurality of template pixels on the corresponding one of first row lines to the length of that of the plurality of first row lines;
   comparing the planar rectangular image with an aspect ratio 2:1 and the planar rectangular template image, retaining image pixels corresponding to the position of each of the pixel lamp beads in the planar rectangular image with an aspect ratio 2:1, and removing all other image pixels other than the image pixels corresponding to the position of each of the pixel lamp beads in the planar rectangular image with an aspect ratio 2:1, to obtain the virtual reality display image.

In this embodiment, during image shooting or making, the virtual reality panoramic image is a three-dimensional spherical image, while the three-dimensional spherical image needs to be processed into a two-dimensional planar image during the period of general-purpose storage, image playing and connection of a display device. In this manner, virtual reality image with an aspect ratio 2:1 is generated.

The number of the image pixels on any one of the latitude lines of the virtual reality panoramic three-dimensional image is proportional to the length of that of the latitude lines, that is to say, the number of the image pixels on any one of the plurality of second latitude lines of the three-dimensional spherical image is proportional to the length of that of the plurality of second latitude lines. Assuming the length of the second parallel corresponding to the equator is W, the number of total image pixels on the second length corresponding to the equator is X, and the length of certain second parallel other than the second parallel corresponding to the equator is Y and the number of corresponding total image pixels is Z, then X/W=Z/Y, accordingly, Z=Y/W^{∗}X. When converting the three-dimensional spherical image 1 into a VR planar rectangular image with an aspect ratio 2:1, geometric correction and stretching will occur in the image based on the features of the VR image with an aspect ratio 2:1.

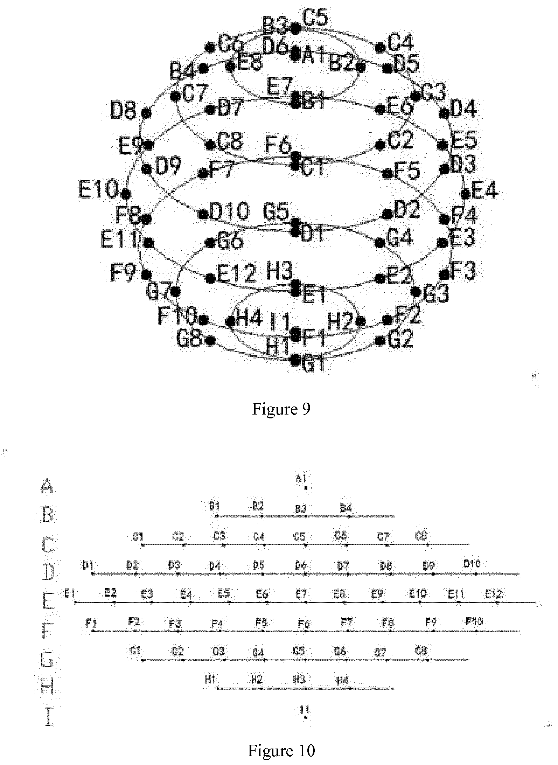

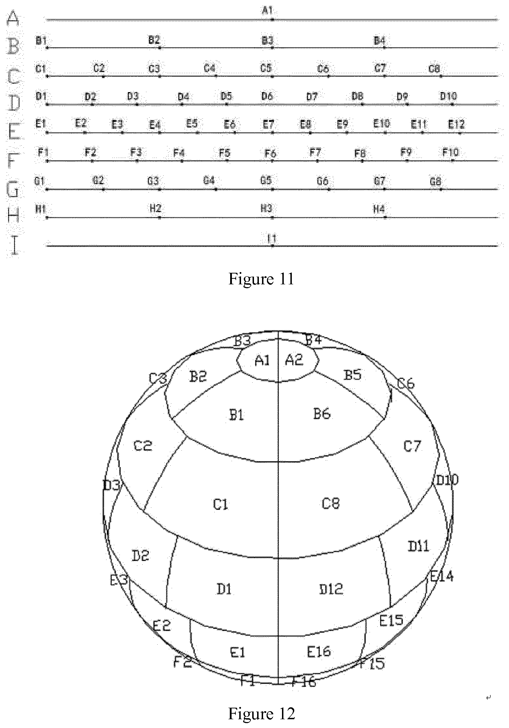

Referring to Figures 9-11, a schematic diagram of a method for making the plurality of pixel lamp beads of the spherical display screen 3 correspond to the image pixels of the planar rectangular image with an aspect ratio 2:1 is shown. Figure 9 is schematic diagram of an arrangement of the plurality of pixel lamp beads on the plurality of first latitude lines in the spherical display screen 3, wherein the first latitude lines of the spherical display screen 3 correspond to the plurality of second latitude lines of the virtual reality panoramic image, and the plurality of pixel lamp beads correspond to the image pixels. Each black spot appearing in Figure 9 is assigned a unique two-digit reference number that consists of one capital letter and one numeral, and each black spot is specific to one unique pixel lamp bead, and black spots of the same latitude are connected together by a line corresponding to one of the plurality of the first latitude lines. Figure 10 is a schematic diagram of the distribution of the plurality of pixel lamp beads on the two-dimensional plane after the spherical display screen 3 is expanded along the direction of the plurality of first latitude lines. Figure 11 is a schematic diagram of an arrangement of pixel lamp beads on a first row lines in a planar rectangular template image, wherein after the spherical display screen 3 is expanded along the direction of the plurality of first latitude lines, each of the pixel lamp beads is located on the position at which the corresponding template pixel is located and each of first latitude lines is located on the position of the corresponding one of first row lines. Accordingly, the position of each of the pixel lamp beads corresponds to each of the template pixels, and each of the first latitude lines corresponds to each of the first row lines, wherein each of the first row lines of the planar rectangular template image corresponds to each of the second row lines of the planar rectangular image with an aspect ratio 2:1. When the snapshot process is performed, the planar rectangular template image and the planar rectangular image with an aspect ratio 2:1 is compared. In the planar rectangular image, one image pixel in the pixel interval corresponding to the pixel lamp bead is retained, and the others are snapshot (that is to say, deleted). After the snapshot process is completed, the virtual reality display image is obtained. Then the virtual reality display image is restored to the original three-dimensional spherical image so as to be displayed in the spherical display surface of the spherical display screen 3 that are composed of a plurality of unit display panels.

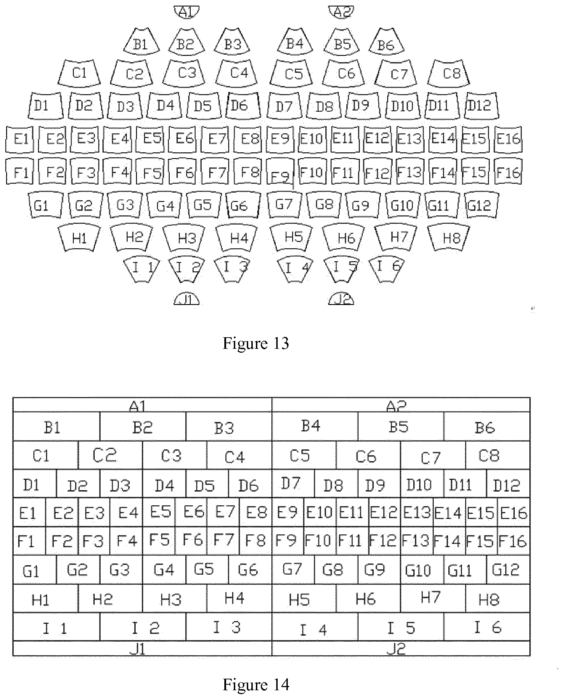

Referring to Figures 12-14, a schematic diagram of a method for making the display unit panels of the spherical display screen 3 correspond to the image pixels of the planar rectangular image with an aspect ratio 2:1 is shown. Figure 12 is a schematic diagram of a distribution of display unit plates on a spherical display surface in a spherical display screen 3, wherein each of the display unit panels corresponds to one pixel region in the planar rectangular image with an aspect ratio 2:1. When the snapshot process is performed, a corresponding display area in the planar rectangular image with an aspect ratio 2:1 can be determined according to the position of the display unit panel in the spherical display screen 3. In figure 12, each of blocks, independent with each other, complementing with each other and overlapping with each other, is assigned a unique two-digit reference number that consists of one capital letter and one numeral, and each block is specific to a unique display unit panel. Figure 13 is a schematic diagram of the distribution of the display unit panels in a unit display screen on the two-dimensional plane after the spherical display screen 3 is expanded along the direction of the plurality of first latitude lines. Figure 14 is a schematic diagram of a distribution of pixel intervals corresponding to display unit plates in a planar rectangular template image. In Figure 14, each of blocks, independent with each other, complementing with each other and overlapping with each other, is assigned a unique two-digit reference number that consists of one capital letter and one numeral, and each block is specific to a unique pixel interval of the corresponding display unit panel, wherein a ratio of the length of the pixel interval on one of the first row lines to the length of that of the first row lines is equal to the ratio of the number of the pixel lamp beads on the corresponding one of the first latitude lines to the length of that of the first latitude lines. When the snapshot process is performed, a corresponding display area in the planar rectangular image with an aspect ratio 2:1 can be determined according to the position of the pixel interval of the pixel lamp beads in the planar rectangular template image (that is, according to the position of the pixel lamp bead in the spherical display screen 3), then a corresponding second row of line in the display area can be determined according to the position of one of the first row lines in the pixel intervals (that is, according to the position of one of the first latitude lines in the spherical display screen 3), next, a corresponding pixel interval and image pixel in the one of the second row lines can be determined according to the position of the pixel lamp bead in the one of the first row lines, finally the snapshot process is done to obtain the virtual reality display image. In conclusion, when displayed in the spherical display screen 3, the virtual reality display image is divided into display areas corresponding to the display unit panels.

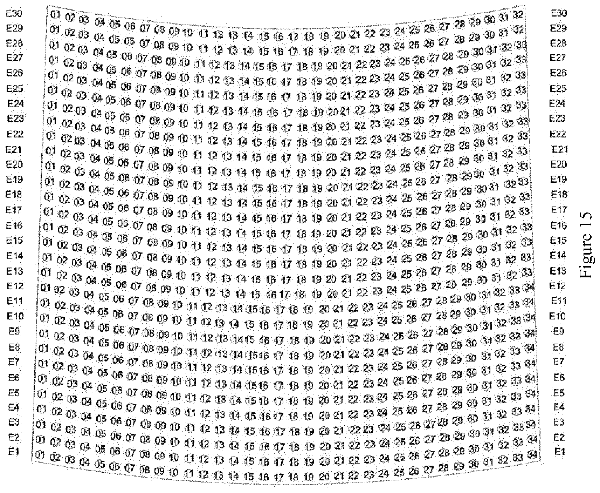

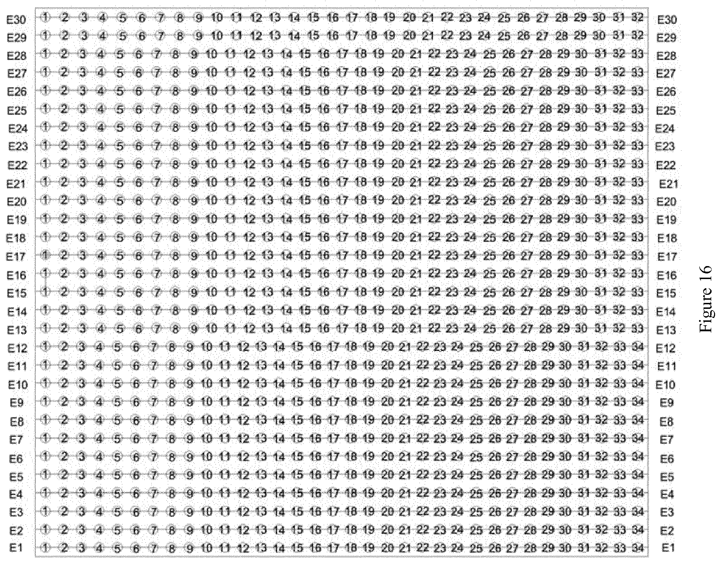

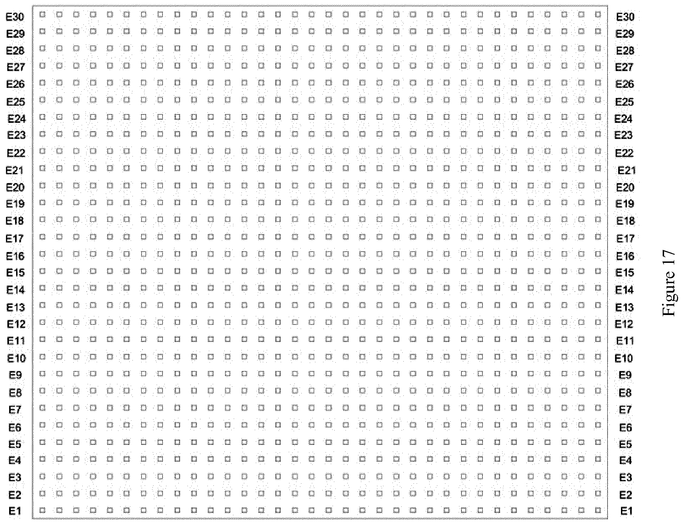

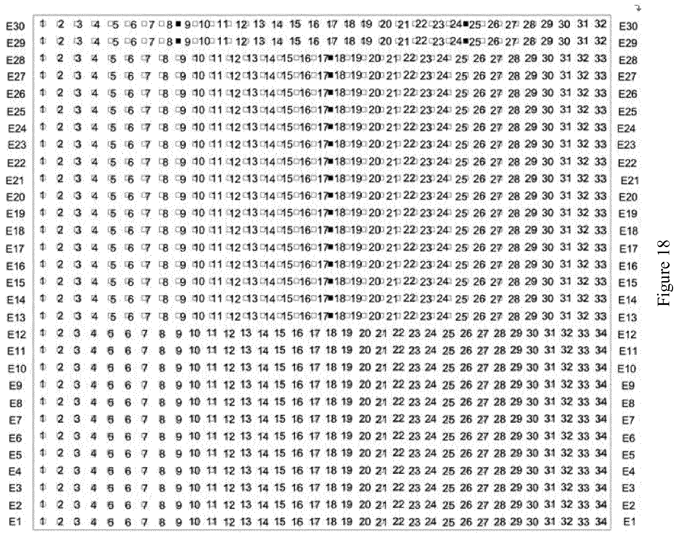

Referring to Figures 15-18, schematic diagrams of flowcharts of a snapshot playing method based on a spherical display screen 3 are shown. Figure 15 shows the arrangement of the pixel lamp beads of the display unit panels in the first latitude lines. Figure 16 shows stretching each of the first latitude lines to a straight line with the same length of corresponding one of first row lines according to the ratio of the number of one of the pixel lamp beads of the display unit panels and corresponding one of the first latitude lines, so that the pixel lamp beads on the first latitude lines are distributed proportionally. Figure 17 shows the distribution of the display unit panels on each of the first row lines, in which the display unit panels correspond to the template pixels in the display area of the planar rectangular image with an aspect ratio 2:1. In Figure 18, Figures 16 and 17 are overlapped to find the positions of the template pixels on the first row lines in which each of the positions of the template pixels corresponds to each of the pixel lamp beads on the first latitude lines, and the image pixels (the black blocks in Figure 18) which do not correspond to the pixel lamp beads on the planar rectangular image with an aspect ratio 2:1 are snapshot (that is, they will not be displayed) in the LED transmitting card 7 or the LED receiving card 8. After the snapshot process, the rest of the image pixels on the second row lines correspond to the pixel lamp beads on the display unit panels one-to-one, and are displayed.

Since the invention presents a complete spherical panoramic image by one-to-one mapping of the pixels of the virtual reality VR panoramic three-dimensional image to the pixel lamp beads of the spherical display screen 3, when performing the snapshot process on the virtual reality planar rectangular image with an aspect ratio 2:1, only the pixel lamp beads of the spherical display screen 3 which correspond to the region proportional to the length of the same latitude (i.e., corresponding second row line) are selected, and other unnecessary pixels are extracted. Since loss of the pixels cannot be felt by the human vision, extraction of the pixels may not affect the integrity of the image, and distortion of the image will not occur when viewed with naked eyes.

In the invention, it is not necessary for the media server to perform a series of operations, such as image segmentation, geometric correction and image fusion. Rather, images are directly displayed in the spherical display screen simply by snapshotting the image pixels on respective latitude lines on the sphere in a certain manner. Therefore, the image processing procedure is simplified, the processing speed of the spherical display screen is accelerated, and thus the issues of image delay and image frame relay and out of sync between regions may be solved.

In a preferred embodiment, the virtual reality panoramic image has a plurality of second latitude lines parallel to one another, and each of the plurality of second latitude lines is uniformly distributed with a plurality of image pixels, and the number of the image pixels on each of the plurality of second latitude lines is proportional to the length of that of the plurality of the second latitude lines;
the planar rectangular image with an aspect ratio 2:1 has a plurality of second row lines that are parallel to one another and respectively correspond to the plurality of second latitude lines, and each of the second row lines is uniformly distributed with a plurality of pixel intervals with the same length, and the ratio of the number of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on corresponding positions;
when performing a snapshot process on the planar rectangular image with an aspect ratio 2:1, each of the pixel lamp beads corresponds to one of the plurality of pixel intervals, and retaining one of the image pixels of the plurality of pixel intervals corresponding to the position of each of the pixel lamp beads in the planar rectangular image with an aspect ratio 2:1, and removing all other image pixels other than one of the image pixels of the plurality of pixel intervals corresponding to the position of each of the pixel lamp beads, to obtain the virtual reality display image.

In a preferred embodiment, the number of the plurality of first row lines is equal to the number of the plurality of second row lines.

In the embodiment as shown in Figure 2, the input terminal 1 comprises:
a virtual reality panoramic camera 4, configured for collecting the virtual reality panoramic image, and performing planarization on the virtual reality panoramic image to obtain and output a planar rectangular image with an aspect ratio 2:1;
a video encoder 5, communicatively connected to the virtual reality panoramic camera 4, configured for receiving the planar rectangular image with an aspect ratio 2:1 and encoding the planar rectangular image with an aspect ratio 2:1; and
a PC 6, communicatively connected to the video encoder 5, configured for receiving the encoded planar rectangular image with an aspect ratio 2:1 and decoding the planar rectangular image with an aspect ratio 2:1, to obtain and output the decoded planar rectangular image with an aspect ratio 2:1.

In this embodiment, processing the three-dimensional spherical image refers to a process in which the three-dimensional spherical image is expanded and tiled to be formed into a planar rectangular image with an aspect ratio 2:1. A panoramic video is captured by the virtual reality panoramic camera 4, and the output mode of the image of the virtual reality panoramic camera is set to image with an aspect ratio 2:1, the image with an aspect ratio 2:1 is then transmitted to the high-definition video image encoder (i.e. video encoder 5) for encoding. Then the encoded image with an aspect ratio 2:1 is transmitted to the PC 6 via network. After decoded by the high-definition video decoding software built in the PC 6, the image information is obtained by the LED studio software built in the PC 6. The image information is acquired and sent by the transmitting card, and is transmitted to the receiving card via UTP (Unshielded Twisted Pair). After the image information is received by the receiving card and the unnecessary pixels are extracted, the pixel lamp beads of the corresponding display unit panels are retained, and the three-dimensional image is displayed on the spherical surface by the plurality of display unit panels.

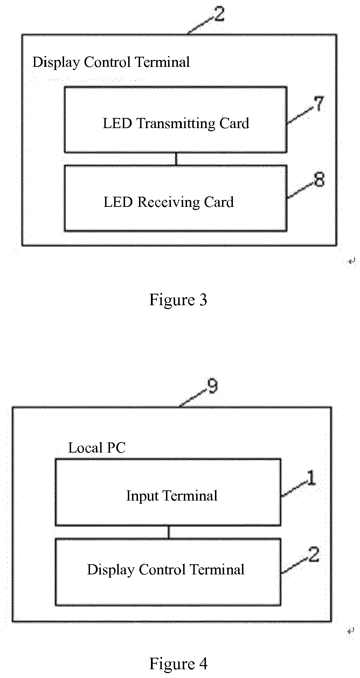

In the embodiment as shown in Figure 3, the display control terminal 2 comprises:
an LED transmitting card 7, configured for collecting a signal of the planar rectangular image with an aspect ratio 2:1 and performing the snapshot process, to obtain and output a signal of the virtual reality display image;
an LED receiving card 8, communicatively connected to the LED transmitting card, configured for receiving the signal of the virtual reality display image and sending the signal of the virtual reality display image to the spherical display screen 3 for displaying.

In this embodiment, the snapshot process is performed by the LED transmitting card 7. The method for snapshot comprises the steps of: the LED transmitting card 7 collecting the planar rectangular image with an aspect ratio 2:1 signal; performing the snapshot process on the planar rectangular image with an aspect ratio 2:1 such that each of the display pixels of the corresponding spherical display will display image pixel in the corresponding pixel interval and the complementary pixels are removed; and the LED transmitting card 7 performs the snapshot process on the planar rectangular image with an aspect ratio 2:1 and outputs the planar rectangular image with an aspect ratio 2:1. The LED receiving card 8 captures a signal of the planar rectangular image with an aspect ratio 2:1 and transmits the signal to the display unit panel of the spherical display screen 3. The display controller controls the spherical display screen 3 to display the planar rectangular image with an aspect ratio 2:1, which has been subjected to the sampling processing, on a three-dimensional spherical surface.

In the embodiment as shown in Figure 3, the display control terminal 2 comprises:
an LED transmitting card 7, configured for collecting and outputting a signal of the planar rectangular image with an aspect ratio 2:1;
an LED receiving card 8, communicatively connected to the transmitting card, configured for receiving the signal of the planar rectangular image with an aspect ratio 2:1 and performing snapshot on the signal of the planar rectangular image with an aspect ratio 2:1, to obtain the virtual reality display image.

In this embodiment, the snapshot process is performed by the LED receiving card 8. The image information is acquired and sent by the LED transmitting card 7, and is transmitted to the LED receiving card 8 via UTP (Unshielded Twisted Pair). After the image information is received by the LED receiving card 8 and the unnecessary pixels are extracted, the pixel lamp beads of the corresponding display unit panels are retained, and the three-dimensional image is displayed on the spherical surface by the plurality of display unit panels.

In the embodiment as shown in Figure 4, the input terminal 1 and the display control terminal 2 are integrated in a local PC 9.

The input terminal 1 is an LED studio software installed in the local PC 9, and the LED studio software is used to play a virtual reality video source to output the virtual reality panoramic image associated with the virtual reality video source.

In this embodiment, the local PC 9 is allowed to play the VR video source directly. The local PC 9 has a built-in LED studio software as the input terminal 1 and then plays the video source. And the local PC 9 has a built-in control software as the display control terminal 2.

Specifically, the LED studio software is turned on in the local PC 9, and the virtual reality video file to be played is put into the LED studio software for playing, and the above-mentioned planar rectangular image with an aspect ratio 2:1 is acquired and output. The LED transmitting card 7 collects and outputs the planar rectangular image with an aspect ratio 2:1. The LED transmitting card 7 is communicatively connected to the LED receiving card 8. The LED receiving card 8 receives a signal of the planar rectangular image with an aspect ratio 2:1 and performs the snapshot process for the planar rectangular image with an aspect ratio 2:1, such that each of display pixels (and pixel lamp beads) of the corresponding spherical display (i.e. the spherical display screen 3) will display image pixel in the corresponding pixel interval, and other complementary image pixels are removed, and the display pixel is transmitted to the display unit panel of the spherical display screen 3. The display controller 2 controls the spherical display screen 3 to display the planar rectangular image with an aspect ratio 2:1, which has been subjected to the snapshot processing, on a three-dimensional spherical surface.

The input terminal 1 and the display control terminal 2 are separated. The input terminal 1 comprises a virtual reality panoramic camera 4, a video encoder 5, and a PC 6. The display control terminal 2 comprises an LED transmitting card 7 and an LED receiving card 8, and is mainly suitable for live broadcasting. The VR video file is acquired by the virtual reality panoramic camera 4, and the planar rectangular image with an aspect ratio 2:1 is output to the display control terminal 2.

The input terminal 1 and the display control terminal 2 are not separated and are integrated in a local PC 9. The input terminal 1 is an LED studio software installed in the local PC 9, and the display control terminal 2 comprises an LED transmitting card 7 and an LED receiving card 8, and is mainly suitable for local playback. The LED studio software is turned on in the local PC 9 and the virtual reality video file to be played is put into the LED studio software for playing. The above-mentioned planar rectangular image with an aspect ratio 2:1 is acquired and output to the display control terminal 2.

In a preferred embodiment, the spherical display screen 3 is composed of a plurality of display unit panels, when performing the snapshot process, the display control terminal 2 determines a corresponding image region in the planar rectangular image with an aspect ratio 2:1 according to the position of each of the plurality of display unit panels in the spherical display screen 3, and determines the corresponding pixel interval and the image pixel in the corresponding display area according to the position of each of the pixel lamp beads in each of the plurality of display unit panels in the plurality of first latitude lines.

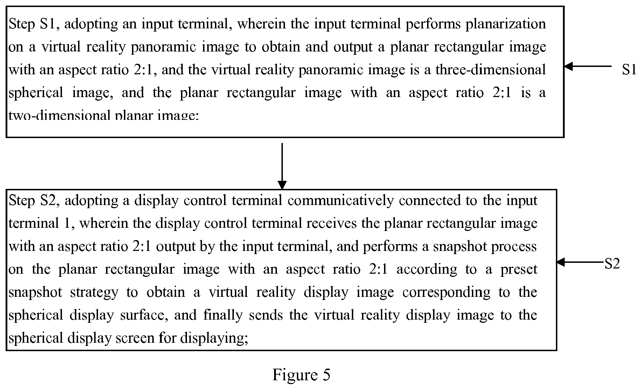

In the embodiment as shown in Figure 5, a playing method based on a spherical display screen 3, comprising the steps of:
Step S1, adopting an input terminal 1, wherein the input terminal 1 performs planarization on a virtual reality panoramic image to obtain and output a planar rectangular image with an aspect ratio 2:1, and the virtual reality panoramic image is a three-dimensional spherical image and the planar rectangular image with an aspect ratio 2:1 is a two-dimensional planar image;
Step S2, adopting a display control terminal 2 communicatively connected to the input terminal 1, wherein the display control terminal 2 receives the planar rectangular image with an aspect ratio 2:1 output by the input terminal, and performs a snapshot process on the planar rectangular image with an aspect ratio 2:1 according to a preset snapshot strategy to obtain a virtual reality display image corresponding to the spherical display surface, and sends the virtual reality display image to the spherical display screen 3 for displaying;
   a spherical display screen 3, wherein the spherical display screen 3 comprises a three-dimensional spherical display surface composed of a plurality of display unit panels, and the spherical display screen has a plurality of first latitude lines parallel to one another, a plurality of pixel lamp beads are uniformly distributed on each of the plurality of first latitude lines;
   wherein the snapshot strategy is:
   presetting a planar rectangular template image associated with the spherical display screen 3, wherein the planar rectangular template image has a plurality of first row lines that are parallel to one another and respectively corresponds to the plurality of first latitude lines, and each of the plurality of first row lines is uniformly distributed with a plurality of template pixels corresponding to the plurality of pixel lamp beads, a ratio of a pitch between adjacent two of the plurality of pixel lamp beads on one of the plurality of first latitude lines to a length of that of the plurality of first latitude lines is identical to the ratio of the pitch between adjacent two of the plurality of template pixels on the corresponding one of the plurality of first row lines to the length of that of the first row lines; and
   comparing the planar rectangular image with an aspect ratio 2:1 and the planar rectangular template image, retaining image pixels corresponding to the position of each of the plurality of pixel lamp beads in the planar rectangular image with an aspect ratio 2:1, and removing all other image pixels other than the image pixels corresponding to the position of each of plurality of the pixel lamp beads in the planar rectangular image with an aspect ratio 2:1, to obtain the virtual reality display image.

In a preferred embodiment, the virtual reality panoramic image has a plurality of second latitude lines parallel to one another, and each of the plurality of second latitude lines is uniformly distributed with a plurality of image pixels, and wherein the number of the plurality of image pixels on each of the plurality of second latitude lines is proportional to the length of that of the plurality of second latitude lines;
the planar rectangular image with an aspect ratio 2:1 has a plurality of second row lines that are parallel to one another and respectively correspond to the plurality of second latitude lines, and each of the plurality of second row lines is uniformly distributed with a plurality of pixel intervals with the same length, and the ratio of the number of the plurality of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on corresponding positions;
when performing a snapshot process on the planar rectangular image with an aspect ratio 2:1, each of the plurality of pixel lamp beads corresponds to one of the plurality of pixel intervals, and retain one of the plurality of image pixels of the plurality of pixel intervals corresponding to the position of each of the plurality of pixel lamp beads in the planar rectangular image with an aspect ratio 2:1, and remove all other image pixels other than one of the plurality of image pixels of the plurality of pixel intervals corresponding to the position of each of the plurality of pixel lamp beads, to obtain the virtual reality display image.

In a preferred embodiment, the number of the plurality of first row lines is equal to the number of the plurality of second row lines.

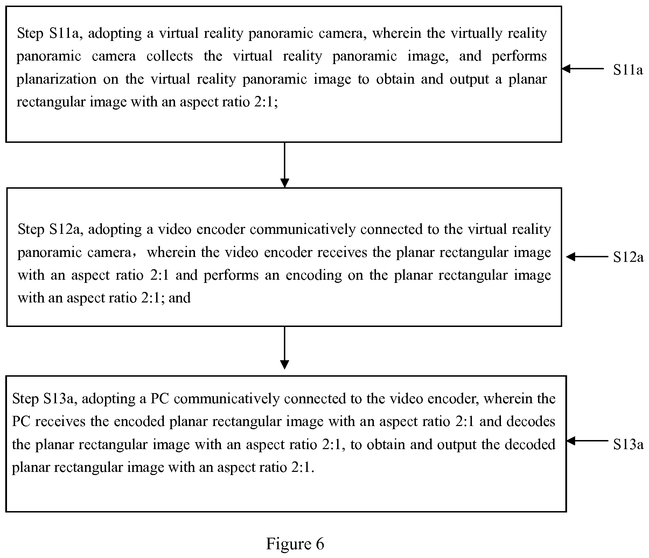

In the embodiment as shown in Figure 6, Step S1 comprises the steps of:
Step S11a, adopting a virtual reality panoramic camera 4, wherein the virtually reality panoramic camera 4 collects the virtual reality panoramic image, and performs planarization on the virtual reality panoramic image to obtain and output a planar rectangular image with an aspect ratio 2:1;
Step S12a, adopting a video encoder 5 communicatively connected to the virtual reality panoramic camera 4, wherein the video encoder 5 receives the planar rectangular image with an aspect ratio 2:1 and encoding the planar rectangular image with an aspect ratio 2:1; and
Step S13a, adopting a PC 6 communicatively connected to the video encoder 5, wherein the PC 6 receives the encoded planar rectangular image with an aspect ratio 2:1 and decodes the planar rectangular image with an aspect ratio 2:1, to obtain and output the decoded planar rectangular image with an aspect ratio 2:1.

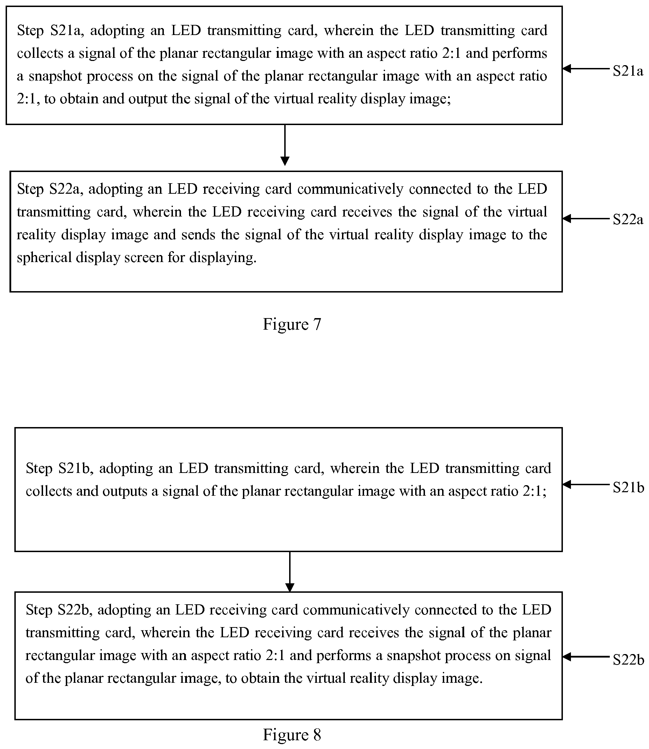

In the embodiment as shown in Figure 7, Step S2 comprises the steps of:
Step S21a, adopting an LED transmitting card 7, wherein the LED transmitting card 7 collects a signal of the planar rectangular image with an aspect ratio 2:1 and performs snapshot process on the signal of the planar rectangular image with an aspect ratio 2:1, to obtain and output the signal of the virtual reality display image;
Step S22a, adopting an LED receiving card 8 communicatively connected to the LED transmitting card 7, wherein the LED receiving card 8 receives signal of the virtual reality display image and sends the signal of the virtual reality display image to the spherical display screen 3 for displaying, that is, sends the signal of the virtual reality display image to the display unit panel of the spherical display screen 3 for displaying.

In the embodiment as shown in Figure 8, Step S2 comprises the steps of:
Step S21b, adopting an LED transmitting card 7, wherein the LED transmitting card 7 collects and outputs a signal of the planar rectangular image with an aspect ratio 2:1 ;
Step S22b, adopting an LED receiving card 8 communicatively connected to the LED transmitting card 7, wherein the LED receiving card 8 receives the signal of the planar rectangular image with an aspect ratio 2:1 and performs a snapshot process on the signal of the planar rectangular image with an aspect ratio 2:1, to obtain the virtual reality display image.

In a preferred embodiment, the input terminal and the display control terminal are integrated in a local PC;
the input terminal 1 is an LED studio software installed in the local PC 9, and wherein the LED studio software is used to play a virtual reality video source to output the virtual reality panoramic image associated with the virtual reality video source.

In a preferred embodiment, the spherical display screen 3 is composed of a plurality of display unit panels, when performing the snapshot process, the display control terminal 2 determines a corresponding image region in the planar rectangular image with an aspect ratio 2:1 according to the position of each of the plurality of display unit panels in the spherical display screen 3, and determines the corresponding pixel interval and the image pixel in the corresponding display area according to the position of each of the plurality of pixel lamp beads in each of the plurality of display unit panels in the plurality of first latitude lines.

The above descriptions are only the preferred embodiments of the invention, not thus limiting the embodiments and scope of the invention. Those skilled in the art should be able to realize that the schemes obtained from the content of specification and drawings of the invention are within the scope of the invention.

## Claims

1. A playing system based on a spherical display screen, comprising:
an input terminal, configured for performing planarization on a virtual reality panoramic image to obtain and output a planar rectangular image with an aspect ratio 2:1, wherein the virtual reality panoramic image is a three-dimensional spherical image, and the planar rectangular image with an aspect ratio 2:1 is a two-dimensional planar image;
a spherical display screen, comprising a three-dimensional spherical display surface composed of a plurality of display unit panels, and having a plurality of first latitude lines parallel to one another, a plurality of pixel lamp beads being uniformly distributed on each of the plurality of first latitude lines; and
a display control terminal, communicatively connected to the input terminal and the spherical display screen, respectively, the display control terminal receiving the planar rectangular image with an aspect ratio 2:1 output by the input terminal and performing a snapshot process on the planar rectangular image with an aspect ratio 2:1 according to a preset snapshot strategy to obtain a virtual reality display image corresponding to the spherical display surface, and sending the virtual reality display image to the spherical display screen for displaying;
wherein the snapshot strategy is:
presetting a planar rectangular template image associated with the spherical display screen, the planar rectangular template image being obtained by planarizing the spherical display screen, and wherein the planar rectangular template image has a plurality of first row lines that are parallel to one another and respectively corresponding to the plurality of first latitude lines, and each of the plurality of first row lines is uniformly distributed with a plurality of template pixels whose positions correspond to the plurality of pixel lamp beads, a ratio of a pitch between adjacent two of the plurality of pixel lamp beads on one of the plurality of the first latitude lines to a length of that of the plurality of the first latitude lines is identical to the ratio of the pitch between adjacent two of the plurality of template pixels on the corresponding one of the plurality of first row lines to the length of that of the plurality of first row lines;
comparing the planar rectangular image with an aspect ratio 2:1 and the planar rectangular template image, retaining image pixels corresponding to the position of each of the pixel lamp beads in the planar rectangular image with an aspect ratio 2:1, and removing all other image pixels other than the image pixels corresponding to the position of each of the pixel lamp beads in the planar rectangular image with an aspect ratio 2:1, to obtain the virtual reality display image.

2. The playing system of claim 1, wherein the virtual reality panoramic image has a plurality of second latitude lines parallel to one another, and each of the plurality of second latitude lines is uniformly distributed with a plurality of image pixels, and wherein the number of the image pixels on each of the plurality of second latitude lines is proportional to the length of that of the plurality of second latitude lines;
the planar rectangular image with an aspect ratio 2:1 has a plurality of second row lines that are parallel to one another and respectively correspond to the plurality of second latitude lines, and each of the second row lines is uniformly distributed with a plurality of pixel intervals with the same length, and the ratio of the number of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on corresponding positions;
when performing a snapshot process on the planar rectangular image with an aspect ratio 2:1, each of the pixel lamp beads corresponds to one of the plurality of pixel intervals, and one of the image pixels of the plurality of pixel intervals corresponding to the position of each of the pixel lamp beads in the planar rectangular image with an aspect ratio 2:1 is retained, and all other image pixels other than one of the image pixels of the plurality of pixel intervals corresponding to the position of each of the pixel lamp beads are removed, so as to obtain the virtual reality display image.

3. The playing system of claim 2, wherein the number of the plurality of first row lines is equal to the number of the plurality of second row lines.

4. The playing system of claim 1, wherein the input terminal comprises:
a virtual reality panoramic camera, configured for collecting the virtual reality panoramic image and performing planarization on the virtual reality panoramic image to obtain and output a planar rectangular image with an aspect ratio 2:1;
a video encoder, communicatively connected to the virtual reality panoramic camera, configured for receiving the planar rectangular image with an aspect ratio 2:1 and encoding the planar rectangular image with an aspect ratio 2:1; and
a PC, communicatively connected to the video encoder, configured for receiving the encoded planar rectangular image with an aspect ratio 2:1 and decoding the planar rectangular image with an aspect ratio 2:1, to obtain and output the decoded planar rectangular image with an aspect ratio 2:1.

5. The playing system of claim 1, wherein the display control terminal comprises:
an LED transmitting card, configured for collecting a signal of the planar rectangular image with an aspect ratio 2:1 and performing the snapshot process , so as to obtain and output a signal of the virtual reality display image;
an LED receiving card, communicatively connected to the LED transmitting card, configured for receiving the signal of the virtual reality display image and sending the signal of the virtual reality display image to the spherical display screen for displaying.

6. The playing system of claim 1, wherein the display control terminal comprises:
an LED transmitting card, configured for collecting and outputting a signal of the planar rectangular image with an aspect ratio 2:1;
an LED receiving card, communicatively connected to the transmitting card, configured for receiving the signal of the planar rectangular image with an aspect ratio 2:1 and performing the snapshot process on the signal of the planar rectangular image with an aspect ratio 2:1, to obtain the virtual reality display image.

7. The playing system of claim 1, wherein the input terminal and the display control terminal are integrated in a local PC.
the input terminal is an LED studio software installed in the local PC, and wherein the LED studio software is used to play a virtual reality video source to output the virtual reality panoramic image associated with the virtual reality video source.

8. The playing system of claim 1, wherein the spherical display screen is composed of a plurality of display unit panels, when performing the snapshot process, the display control terminal determines a corresponding image region in the planar rectangular image with an aspect ratio 2:1 according to the position of each of the plurality of display unit panels in the spherical display screen, and determines the corresponding pixel interval and the image pixel in the corresponding display area according to the position of each of the pixel lamp beads in each of the plurality of display unit panels in the plurality of first latitude lines .

9. A playing method based on a spherical display screen, comprising the steps of:
Step S1, adopting an input terminal, wherein the input terminal performs planarization on a virtual reality panoramic image to obtain and output a planar rectangular image with an aspect ratio 2:1, and the virtual reality panoramic image is a three-dimensional spherical image, and the planar rectangular image with an aspect ratio 2:1 is a two-dimensional planar image;
Step S2, adopting a display control terminal communicatively connected to the input terminal, wherein the display control terminal receives the planar rectangular image with an aspect ratio 2:1 output by the input terminal, and performs a snapshot process on the planar rectangular image with an aspect ratio 2:1 according to a preset snapshot strategy so as to obtain a virtual reality display image corresponding to the spherical display surface, and sends the virtual reality display image to the spherical display screen for displaying;
a spherical display screen, wherein the spherical display screen comprises a three-dimensional spherical display surface composed of a plurality of display unit panels, and the spherical display screen has a plurality of first latitude lines parallel to one another, a plurality of pixel lamp beads are uniformly distributed on each of the plurality of first latitude lines;
wherein the snapshot strategy is:
presetting a planar rectangular template image associated with the spherical display screen, wherein the planar rectangular template image has a plurality of first row lines that are parallel to one another and respectively correspond to the plurality of first latitude lines, and each of the plurality of first row lines is uniformly distributed with a plurality of template pixels corresponding to the plurality of pixel lamp beads, a ratio of a pitch between adjacent two of the plurality of pixel lamp beads on one of the plurality of first latitude lines to a length of that of the plurality of first latitude lines is identical to the ratio of the pitch between adjacent two of the plurality of template pixels on the corresponding one of the plurality of first row lines to the length of that of the first row lines; comparing the planar rectangular image with an aspect ratio 2:1 and the planar rectangular template image, retaining image pixels corresponding to the position of each of the plurality of pixel lamp beads in the planar rectangular image with an aspect ratio 2:1, and removing all other image pixels other than the image pixels corresponding to the position of each of the plurality of pixel lamp beads in the planar rectangular image with an aspect ratio 2:1, to obtain the virtual reality display image.

10. The playing method of claim 9, wherein the virtual reality panoramic image has a plurality of second latitude lines parallel to one another, and each of the plurality of second latitude lines is uniformly distributed with a plurality of image pixels, and wherein the number of the plurality of image pixels on each of the plurality of second latitude lines is proportional to the length of that of the plurality of second latitude lines;
the planar rectangular image with an aspect ratio 2:1 has a plurality of second row lines that are parallel to one another and respectively correspond to the plurality of second latitude lines, and each of the plurality of second row lines is uniformly distributed with a plurality of pixel intervals with the same length, and the ratio of the number of the plurality of image pixels on one of the plurality of second latitude lines to the length of that of the plurality of second latitude lines is identical to the ratio of the number of the plurality of pixel intervals on the corresponding one of the plurality of second row lines to the length of that of the plurality of second row lines, and each of the plurality of pixel intervals comprises a plurality of identical image pixels on corresponding positions;
when performing a snapshot process on the planar rectangular image with an aspect ratio 2:1, each of the plurality of pixel lamp beads corresponds to one of the plurality of pixel intervals, retain one of the plurality of image pixels of the plurality of pixel intervals corresponding to the position of each of the plurality of pixel lamp beads in the planar rectangular image with an aspect ratio 2:1, and remove all other image pixels other than one of the plurality of image pixels of the plurality of pixel intervals corresponding to the position of each of the plurality of pixel lamp beads, to obtain the virtual reality display image.

11. The playing method of claim 10, wherein the number of the plurality of first row lines is equal to the number of the plurality of second row lines.

12. The playing method of claim 9, wherein Step S1 comprises the steps of:
Step S11a, adopting a virtual reality panoramic camera, wherein the virtually reality panoramic camera collects the virtual reality panoramic image, and performs planarization on the virtual reality panoramic image to obtain and output a planar rectangular image with an aspect ratio 2:1;
Step S12a, adopting a video encoder communicatively connected to the virtual reality panoramic camera, wherein the video encoder receives the planar rectangular image with an aspect ratio 2:1 and performs an encoding on the planar rectangular image with an aspect ratio 2:1; and
Step S13a, adopting a PC communicatively connected to the video encoder, wherein the PC receives the encoded planar rectangular image with an aspect ratio 2:1 and decodes the planar rectangular image with an aspect ratio 2:1, to obtain and output the decoded planar rectangular image with an aspect ratio 2:1.

13. The playing method of claim 9, wherein Step S2 comprises the steps of:
Step S21a, adopting an LED transmitting card, wherein the LED transmitting card collects a signal of the planar rectangular image with an aspect ratio 2:1 and performs a snapshot process on the signal of the planar rectangular image with an aspect ratio 2:1, to obtain and output the signal of the virtual reality display image;
Step S22a, adopting an LED receiving card communicatively connected to the LED transmitting card, wherein the LED receiving card receives the signal of the virtual reality display image and sends the signal of the virtual reality display image to the spherical display screen for displaying.

14. The playing method of claim 9, wherein Step S2 comprises the steps of:
Step S21b, adopting an LED transmitting card, wherein the LED transmitting card collects and outputs a signal of the planar rectangular image with an aspect ratio 2:1;
Step S22b, adopting an LED receiving card communicatively connected to the LED transmitting card, wherein the LED receiving card receives the signal of the planar rectangular image with an aspect ratio 2:1 and performs a snapshot process on the signal of the planar rectangular 2:1 image, to obtain the virtual reality display image.

15. The playing method of claim 9, wherein the input terminal and the display control terminal are integrated in a local PC;
the input terminal is an LED studio software installed in the local PC, and wherein the LED studio software is used to play a virtual reality video source to output the virtual reality panoramic image associated with the virtual reality video source.

16. The playing method of claim 9, wherein the spherical display screen is composed of a plurality of display unit panels, when performing the snapshot process, the display control terminal determines a corresponding image region in the planar rectangular image with an aspect ratio 2:1 according to the position of each of the plurality of display unit panels in the spherical display screen, and determines the corresponding pixel interval and the image pixel in the corresponding image area according to the position of each of the plurality of pixel lamp beads in each of the plurality of display unit panels in the plurality of first latitude lines.
